# FASCICULE DE BREVET EUROPEEN

(11) **EP 0 611 675 B1**
(45) Date de publication et mention de la délivrance du brevet: **20.01.1999**
(21) Numéro de dépôt: 94101768.3
(22) Date de dépôt: 05.02.1994
(51) Int. Cl.: B60L 7/22, B60H 1/22, B60L 11/12

(54) **Véhicule automobile à traction électrique comprenant un dispositif de récupération d'énergie**
Fahrzeug mit elektrischem Antrieb mit einer Vorrichtung zur Rückgewinnung der Energie
Electric traction vehicle with energy recovery device

(30) Priorité: 15.02.1993 FR 9301756
(43) Date de publication de la demande: 24.08.1994
(73) Titulaire: The Swatch Group Management Services AG, 2501 Biel (CH)
(72) Inventeur: Chevroulet, Tristan, CH-2000 Neuchâtel (CH); Damminger, Ludwig, D-3177 Sassenburg 4 (DE)
(74) Mandataire: de Montmollin, Henri

(56) Documents cités:
- DE-A- 2 710 766
- US-A- 3 544 873
- SOVIET PATENTS ABSTRACTS Section PQ, Week 9205, 18 Mars 1992 Derwent Publications Ltd., London, GB; Class Q, AN 92-039959 & SU-A-1 632 824 (LENINGRAD PLEKHANOV MINE) 29 Juin 1988

## Description

L'invention concerne un véhicule à traction électrique comprenant un dispositif de récupération d'énergie et plus particulièrement un tel véhicule comprenant un dispositif de récupération de l'énergie produite lors du freinage électrique du véhicule.

On connaît déjà des véhicules automobiles à traction électrique tels que le véhicule décrit dans le document DE 40 11 291. Ce type de véhicule comprend au moins une roue motrice, des moyens de freinage mécanique de ladite roue, au moins un moteur électrique couplé mécaniquement à ladite roue motrice, un accumulateur d'énergie électrique rechargeable et des moyens de gestion et de transfert d'énergie couplés à l'accumulateur et au moteur électrique, comportant des moyens de freinage électrique permettant de faire fonctionner ledit moteur électrique en mode génératrice.

Certains de ces véhicules comprennent un système de freinage mixte dans lequel le freinage est réalisé, d'une part, électriquement en faisant fonctionner le moteur électrique en mode génératrice ce qui permet en outre de recharger l'accumulateur, et d'autre part, mécaniquement de façon classique , par exemple, à l'aide de disques.

Toutefois, on s'est aperçu que l'intensité du courant ainsi produit par le moteur électrique lors du freinage électrique atteignait facilement des valeurs élevées, de l'ordre de quelques centaines d'ampères, qui dépassait de loin les courants de charge que l'accumulateur peut absorber, l'intensité du courant de charge maximum étant généralement de l'ordre de quelques dixièmes de l'intensité que l'accumulateur peut débiter en une heure pour la plupart des accumulateurs couramment utilisés dans ces applications.

Par conséquent, dans le cas où l'accumulateur est faiblement chargé, l'énergie électrique produite lors du freinage électrique conduit à une charge non appropriée de l'accumulateur, pouvant détériorer ce dernier et réduire de façon importante sa durée de vie escomptée.

D'autre part, lorsque l'accumulateur est proche de sa charge maximum, l'énergie électrique produite lors du freinage électrique surcharge l'accumulateur, ce qui conduit à une situation dans laquelle la tension aux bornes de l'accumulateur devient sensiblement égale à celle délivrée par le circuit de charge ou en d'autres termes à une limitation voire une suppression de circulation de courant dans l'accumulateur et par conséquent à grande réduction voire une annulation de l'effet de freinage électrique désire.

Une solution consiste à prévoir un circuit qui limite l'intensité du courant produit par le moteur électrique fonctionnant en mode génératrice. Toutefois une telle limitation diminue considérablement l'efficacité du freinage électrique, de sorte que ce type de freinage perd une grande partie de son intérêt.

Une autre solution, décrite dans le brevet US 3 544 873 qui correspond au préambule de la revendication 1, consiste à dissiper dans une résistance au moins une partie de l'énergie électrique excédentaire due au freinage lorsque l'accumulateur est complétement chargé. Cependant, cette énergie est dissipée dans l'atmosphère et donc complètement gaspillée.

Dans la publication DE-A-27 10 766, qui ne concerne pas un véhicule automobile mais un véhicule ferroviaire à traction électrique n'utilisant pas d'accumulateur, il est prévu de dissiper l'énergie électrique produite par le freinage dans un circuit à eau primaire spécialement destiné à cet effet, ce circuit ayant un radiateur pour évacuer de la chaleur dans l'atmosphère, ainsi qu'un branchement à un circuit secondaire qui sert à chauffer le compartiment des voyageurs. Un tel système est compliqué et nécessite d'ajouter au véhicule un circuit complet pour permettre l'utilisation de la chaleur dissipée par résistance.

Encore une autre solution est appliquée selon la publication SU-A-1 632 824, qui concerne un véhicule de chantier à traction Diesel-électrique. Dans ce cas, les résistances de dissipation sont placées dans un refroidisseur où passe le circuit d'air d'admission du moteur Diesel. L'air ainsi chauffé passe ensuite dans un turbocompresseur, puis dans une chambre de refroidissement intermédiaire ("intercooler") avant l'admission dans le moteur. Une telle solution n'est pas avantageuse, puisqu'il est bien connu que toute élévation de température de l'air d'admission est néfaste pour le rendement du moteur. Le chauffage supplémentaire par les résistances de freinage doit donc être compensé par un surdimensionnement de la chambre de refroidissement intermédiaire. La chaleur dissipée est rejetée dans l'atmosphère et n'est donc pas utilisée.

On connaît également des véhicules automobiles à traction hybride comprenant la combinaison d'une traction électrique et d'une traction classique à combustion interne tel que celui décrit dans le document US 4'306'156 et pour lequel les même types de problèmes se posent.

L'invention a donc pour but principal de remédier aux inconvénients de l'art antérieur susmentionné, en fournissant notamment un véhicule automobile à traction électrique comprenant un système de freinage mixte et dans lequel l'énergie électrique produite lors du freinage électrique n'endommage pas, pour le moins, l'accumulateur et peut, le cas échéant, être utilisée de façon avantageuse, par exemple pour la charge de l'accumulateur. L'invention a aussi pour but de réaliser les moyens de dissipation en utilisant, avec très peu d'adaptations, des organes déjà en place dans le véhicule.

A cet effet l'invention a pour objet un véhicule automobile à traction électrique tel que défini dans la revendication 1.

L'invention trouve ainsi une application particulièrement avantageuse aux véhicules à traction hybride électrique et à moteur à combustion car il est, dans ce cas, très simple et économique d'utiliser le circuit de refroidissement du moteur à combustion déjà en place, et cela avec très peu d'adaptations.

L'énergie électrique provenant du freinage non utilisée est dissipée de façon très simple et économique, c'est-à-dire à l'aide d'une simple résistance qui est mise en place en contact thermique étroit avec une conduite du circuit de refroidissement et cela sans transformation coûteuse du véhicule. Ce véhicule présente ainsi l'avantage de pouvoir utiliser le freinage électrique dans les meilleures conditions d'efficacité sans risquer d'endommager l'accumulateur puisque l'énergie électrique en surplus provenant du freinage électrique est facilement dissipée par le circuit de refroidissement.

Selon une caractéristique avantageuse de l'invention, le circuit de refroidissement comprend un premier échangeur de chaleur avec l'extérieur du véhicule, une première pompe et des conduites reliant en circuit fermé le premier échangeur, la première pompe et le moteur à combustion, la résistance de dissipation étant disposée en contact thermique étroit avec une partie d'une desdites conduites.

Ainsi, il est possible, même dans les conditions de fonctionnement du véhicule conduisant à porter la résistance à des températures élevées, de pouvoir dissiper rapidement et efficacement l'énergie thermique produite par la résistance.

Selon une caractéristique avantageuse du mode de réalisation préféré de l'invention, le circuit de refroidissement comprend en outre une conduite de dérivation branchée en parallèle sur le premier échangeur de chaleur et un deuxième échangeur de chaleur avec l'intérieur du véhicule, placé dans ledit circuit entre la résistance de dissipation et ladite conduite de dérivation.

Ainsi, dans des conditions de circulation urbaine en traction purement électrique et lorsque le chauffage de l'habitacle est enclenché, ce mode de réalisation permet d'augmenter considérablement l'autonomie du véhicule puisque la consommation électrique d'un dispositif de chauffage peut facilement atteindre des valeurs voisines de celles de la consommation du moteur électrique de traction.

Selon une caractéristique avantageuse du mode de réalisation préféré de l'invention, le circuit de refroidissement comprend une deuxième pompe reliée mécaniquement au moteur à combustion.

Aussi, la première pompe, indépendante du fonctionnement du moteur à combustion, peut faire circuler le fluide de refroidissement dans le système de refroidissement indépendamment de la marche du moteur à combustion ce qui permet, sans utilisation de composants supplémentaires, de préchauffer le moteur à combustion lorsque le véhicule est immobilisé pour recharger l'accumulateur.

D'autres caractéristiques et avantages de l'invention apparaîtront plus clairement à la lecture de la description qui suit d'un mode de réalisation de l'invention donné à titre purement illustratif et non limitatif, cette description étant faite en liaison avec le dessin dans lequel:
- la figure 1 est un schéma-bloc représentant une partie d'un mode de réalisation d'un véhicule selon l'invention; et
- la figure 2 est un schéma-bloc représentant un mode de réalisation d'un véhicule selon l'invention, comprenant les éléments de la figure 1.

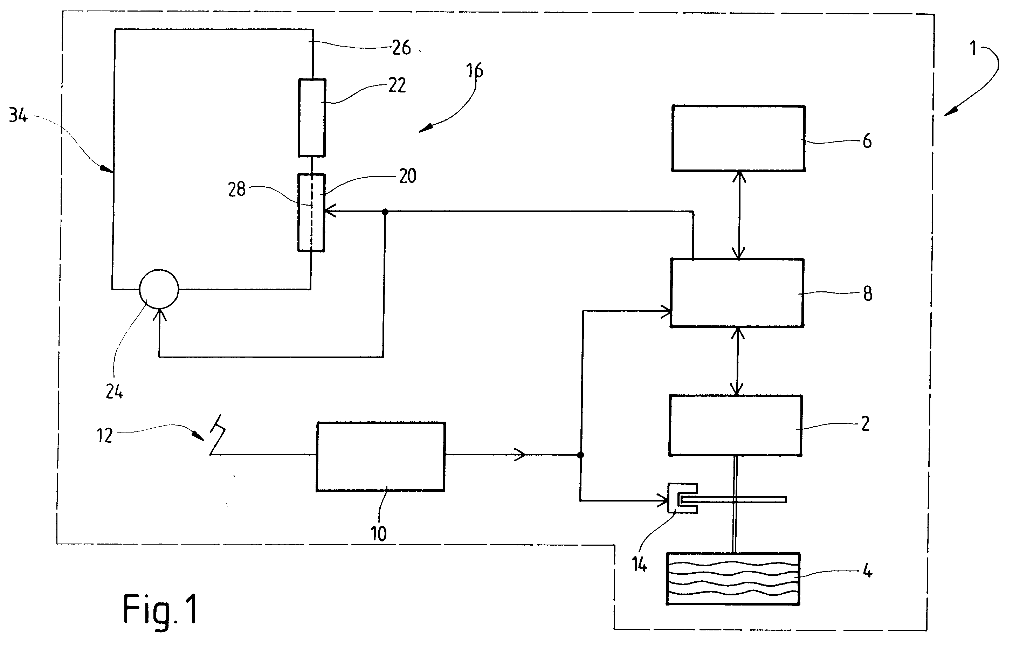

Le véhicule schématisé à la figure 1, dans laquelle il est désigné par la référence 1, comporte un moteur électrique 2, par exemple un moteur asynchrone, dont le rotor (non représenté) est relié mécaniquement à une roue motrice du véhicule 4. Dans cette figure, le moteur 2 et la roue 4 sont séparés, leur liaison mécanique étant symbolisée par un double trait. Bien entendu, ce moteur et cette roue peuvent être accolés l'un à l'autre ou peuvent être reliés par l'intermédiaire d'un arbre de transmission et/ou d'un train d'engrenages.

Le véhicule comprend également un accumulateur d'énergie électrique rechargeable 6, qui est relié au stator du moteur électrique 2, non représenté séparément, par l'intermédiaire d'un circuit de gestion et de transfert d'énergie 8 qui est notamment agencé pour fournir l'énergie nécessaire au fonctionnement du moteur 2 sous la forme d'une tension et d'un courant alternatif à partir de l'énergie électrique qu'il reçoit de l'accumulateur 6, ou d'un circuit qui sera décrit ci-après.

Le véhicule comporte en outre un circuit de commande de freinage 10 qui, en réponse à l'actionnement d'une pédale de commande 12 par l'utilisateur, agit, d'une, part sur des moyens de freinage mécanique 14, par exemple un dispositif de freinage à disques, et d'autre part sur des moyens de freinage électrique permettant de faire fonctionner le moteur électrique 2 en mode génératrice via le circuit de gestion et de transfert d'énergie 8.

Le véhicule comprend en outre des moyens de dissipation 16 de l'énergie électrique produite au cours du freinage électrique, comprenant un circuit de refroidissement à circulation de fluide 34 et une résistance de dissipation 20 coopérant au moins indirectement avec ledit circuit de refroidissement.

Le circuit de refroidissement 34 comprend un échangeur de chaleur 22 avec l'extérieur du véhicule et une pompe 24 reliés entre eux au moyen de conduites 26.

Dans l'exemple décrit, la résistance de dissipation 20 est disposée en contact thermique avec une partie 28 d'une des conduites 26 du circuit de refroidissement 34. De préférence la résistance 20 est enroulée autour de la partie 28 par exemple dans une gorge hélicoïdale ménagée à cet effet à l'extérieur de la partie de la conduite en question. Pour obtenir un échange thermique efficace entre la résistance 20 et le fluide de refroidissement, la partie 28 en contact direct avec la résistance 20 est réalisée en matériau présentant des propriétés de conductivité thermique élevée tel que l'aluminium ou analogue. La résistance 20 sera par exemple une résistance du type DIN 17470.

L'échangeur 22 est un radiateur classique qui est disposé de préférence dans la partie avant du véhicule et qui coopère avec l'air ambiant pour évacuer la chaleur accumulée par le fluide de refroidissement. Quant à la pompe 24, elle est actionnée en réponse à un signal de commande provenant des moyens de gestion et de transfert d'énergie et permet de faire circuler le fluide refroidissement dans les conduites 26 et notamment dans l'échangeur 22 afin d'optimiser l'effet de refroidissement du circuit.

On notera à ce propos que le circuit 8 comprend notamment des moyens, connus de l'homme du métier, pour produire un signal représentatif du degré de charge de l'accumulateur 6 et des moyens de commande qui, en réponse au signal de mesure indiquant que l'accumulateur est complètement chargé, dérivent au moins une partie du courant de charge sur les moyens de dissipation 20 et enclenchent la pompe 24.

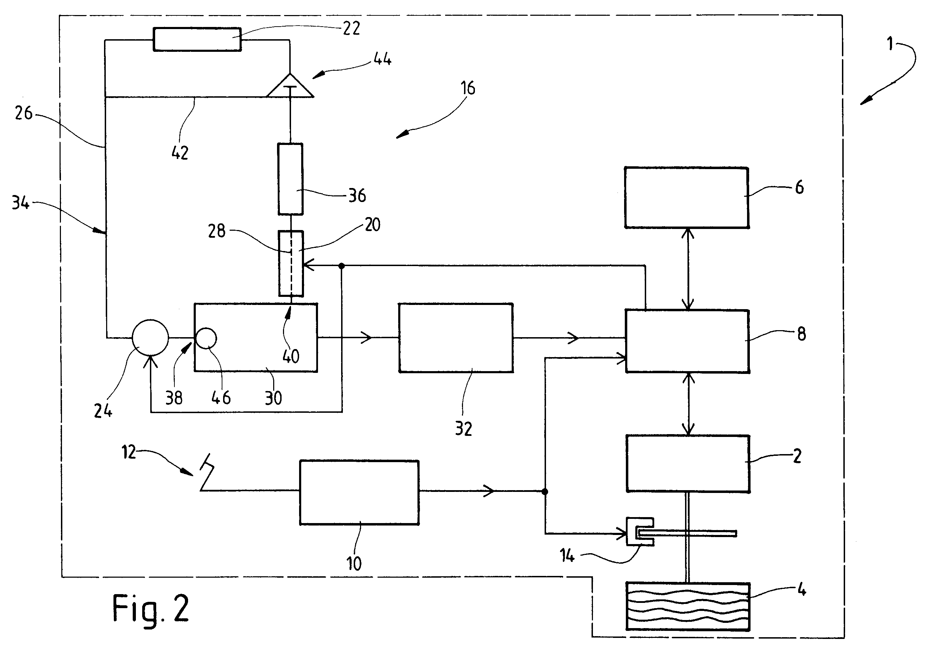

A la figure 2 est représenté un véhicule automobile selon un mode de réalisation préféré de l'invention et dans laquelle on a désigné les éléments identiques à ceux de la figure 1 par les mêmes références numériques.

Il s'agit dans ce cas d'un véhicule à traction hybride électrique et à combustion interne.

Outre ce qui est décrit en liaison avec la figure 1, ce véhicule comprend un moteur à combustion 30 couplé mécaniquement au rotor (non représenté) d'un générateur de tension alternative 32. Le stator (non représenté) du générateur 32 est relié à l'accumulateur 6 par l'intermédiaire du circuit de gestion et de transfert d'énergie 8 pour fournir à partir de la tension alternative produite par le générateur 32 une tension sensiblement égale à la tension produite par l'accumulateur 6.

Le moteur à combustion 30 comprend par ailleurs un circuit de refroidissement 34 qui selon l'invention forme une partie des moyens de dissipation 16. Dans ce mode de réalisation, le circuit de refroidissement 34 comprend l'échangeur de chaleur 22, un autre deuxième échangeur de chaleur 36 avec l'intérieur du véhicule, ces échangeurs étant reliés tous les deux en série.

L'échangeur de chaleur 22 et l'échangeur de chaleur 36 sont reliés, par les conduites 26, entre une entrée de refroidissement 38 et une sortie de refroidissement 40 du moteur à combustion 30.

L'échangeur 22 est disposé comme dans l'exemple précédent dans la partie avant du véhicule et l'échangeur 36 est relié avec l'habitacle et coopère avec un ventilateur (non représenté) pour récupérer la chaleur accumulée par le fluide de refroidissement.

Le circuit de refroidissement 34 comprend par ailleurs une conduite de dérivation 42 branchée en parallèle sur le premier échangeur 22, la branche de la dérivation située du coté de la sortie de refroidissement 40 étant reliée à une vanne de dérivation 44 qui en fonction de la température du fluide de refroidissement et du mode de fonctionnement du véhicule empêche la circulation du fluide refroidissement à travers l'échangeur 22.

Dans ce mode de réalisation, la pompe 24 est disposée de préférence en amont de l'entrée de refroidissement 38 et le moteur à combustion comprend, en aval de son entrée de refroidissement, sa propre pompe 46 à fluide de refroidissement pour faire circuler le fluide de refroidissement depuis l'entrée de refroidissement 38 vers la sortie de refroidissement 40 à travers le moteur à combustion lorsque ce dernier est en fonctionnement. La pompe 46 est par exemple reliée mécaniquement au moteur à combustion 30.

Le fonctionnement d'un véhicule selon l'invention est le suivant.

Lorsque le véhicule 1 est immobile et branché sur une source de courant extérieure, toute l'énergie provenant de cette source est utilisée pour la charge de l'accumulateur 6.

Lorsque les moyens de mesure du degré de charge indiquent que l'accumulateur 6 est complètement chargé, les moyens de gestion et de transfert d'énergie 8 peuvent selon une programmation appropriée, soit simplement arrêter la charge, soit arrêter la charge et utiliser le courant de charge pour activer la résistance de dissipation 20 et stocker une certaine quantité d'énergie dans le fluide de refroidissement. Le cas échéant, les moyens de gestion 8 peuvent activer le ventilateur de chauffage de l'habitacle du véhicule selon le deuxième mode de réalisation ou encore préchauffer le moteur à combustion avant son démarrage, ce qui permet non seulement d'augmenter considérablement sa durée de vie mais aussi de diminuer de façon importante les émissions de gaz nocifs produites au démarrage.

Lorsque le véhicule circule et que l'accumulateur est complètement chargé, ou le cas échéant surchargé, les moyens de gestion et de transfert d'énergie 6 dirigent toute l'énergie électrique produite au cours du freinage électrique sur la résistance de dissipation 20.

Maintenant, lorsque le véhicule circule et que l'accumulateur n'est pas complètement chargé, les moyens de gestion et de transfert d'énergie répartissent l'énergie électrique produite au cours du freinage électrique sur la résistance de dissipation 20 et dans l'accumulateur 6, la répartition dépendant à la fois du degré de charge de l'accumulateur 6 et de la quantité d'énergie électrique produite lors du freinage électrique, le degré de charge étant connu à chaque instant par les moyens de gestion et de transfert d'énergie 8.

## Revendications

1. Véhicule automobile à traction électrique (1) comprenant au moins une roue motrice (4), des moyens de freinage mécanique (14) de ladite roue (1), au moins un moteur électrique (2) couplé mécaniquement à ladite roue motrice (4), un accumulateur d'énergie électrique rechargeable (6) et des moyens de gestion et de transfert d'énergie (8) couplés à l'accumulateur (6) et au moteur électrique (2), le véhicule comportant en outre des moyens de freinage électrique permettant de faire fonctionner le moteur électrique (2) en mode génératrice, et des moyens de dissipation par résistance (16) d'énergie électrique produite au cours du freinage électrique, et étant caractérisé en ce qu'il comporte en outre un moteur à combustion (30), pourvu d'un circuit de refroidissement (34) à circulation de fluide, et un générateur d'énergie électrique (32) relié au moins indirectement au moteur à combustion (30) pour recharger l'accumulateur (6) et en ce que lesdits moyens de dissipation (16) comprennent ledit circuit de refroidissement (34) et une résistance de dissipation (20) disposée en contact thermique avec une conduite (26) de fluide du circuit de refroidissement (34) pour transmettre de la chaleur audit fluide.

2. Véhicule selon la revendication 1, caractérisé en ce que le circuit de refroidissement (34) comprend un premier échangeur (22) de chaleur avec l'extérieur du véhicule (1), une première pompe (24) et des conduites (26) reliant en circuit fermé le premier échangeur, la première pompe et le moteur à combustion, la résistance de dissipation étant disposée en contact thermique étroit avec une partie (28) d'une desdites conduites (26).

3. Véhicule selon la revendication 2, caractérisé en ce que la résistance est enroulée autour de ladite partie (28).

4. Véhicule selon les revendications 2 ou 3, caractérisé en ce que les moyens de gestion et de transfert d'énergie (8) comprennent des moyens pour produire un signal de mesure représentatif du degré de charge de l'accumulateur (6) et des moyens de commande qui, en réponse au signal de mesure indiquant que l'accumulateur est complètement chargé, dérivent au moins une partie du courant de charge sur les moyens de dissipation (20) et enclenchent ladite première pompe (24).

5. Véhicule selon l'une des revendications précédentes, caractérisé en ce que les conduites (26) du circuit de refroidissement (34) s'étendent entre une entrée (38) et une sortie (40) de refroidissement du moteur à combustion (30) et en ce que le premier échangeur (22) est placé dans ledit circuit (34) entre la résistance (20) de dissipation et ladite entrée de refroidissement (38).

6. Véhicule selon la revendication 5, caractérisé en ce qu'il comprend en outre une deuxième pompe (46), reliée mécaniquement audit moteur à combustible (30).

7. Véhicule selon l'une des revendications 5 ou 6, caractérisé en ce que le circuit de refroidissement (34) comprend en outre une conduite de dérivation (42), branchée en parallèle au premier échangeur de chaleur (22), et un deuxième échangeur de chaleur (36) avec l'intérieur du véhicule, placé dans ledit circuit (34) entre la résistance de dissipation (20) et la conduite de dérivation (42).

## Claims

1. Electrically driven automobile vehicle (1) comprising at least one drive wheel (4), mechanical braking means (14) for braking said wheel (1), at least one electric motor (2) mechanically coupled to said drive wheel (4), a rechargeable electrical energy accumulator (6) and energy management and transfer means (8) coupled to the accumulator (6) and to the electric motor (2), the vehicle further comprising electrical braking means allowing the electric motor (2) to operate in generator mode, and resistive dissipation means (16) for dissipating electrical energy produced in the course of the electrical braking, and being characterized in that it further comprises a combustion engine (30), having a fluid circulation cooling circuit (34), and an electrical energy generator (32) connected at least indirectly to the combustion engine (30) to recharge the accumulator (6), and in that said dissipation means (16) comprise said cooling circuit (34) and a dissipation resistor (20) disposed in thermal contact with a fluid conduit (26) of the cooling circuit (34) to transmit heat to said fluid.

2. Vehicle according to claim 1, characterized in that the cooling circuit (34) comprises a first exchanger (22) for exchanging heat with the exterior of the vehicle (1), a first pump (24) and conduits (26) connecting in closed circuit the first exchanger, the first pump and the combustion engine (30), the dissipation resistor being disposed in close thermal contact with a part (28) of one of said conduits (26).

3. Vehicle according to claim 2, characterized in that the resistor is wrapped around said part (28).

4. Vehicle according to claim 2 or 3, characterized in that said energy management and transfer means (8) comprise means for producing a measurement signal representative of the degree of charge of the accumulator (6) and control means which, in response to the measurement signal indicating that the accumulator is completely charged, derive at least part of the charge current towards said dissipation means (20) and operate said first pump (24).

5. Vehicle according to any of the preceding claims, charaterized in that said conduits (26) of the cooling circuit (34) extend between a cooling input (38) and a cooling output (40) of said combustion engine (30) and in that said first exchanger (22) is located in said circuit between the dissipation resistor (20) and said cooling input (38).

6. Vehicle according to claim 5, characterized in that it further comprises a second pump (46) mechanically connected to said combustion engine (30).

7. Vehicle according to one of claims 5 or 6, characterized in that the cooling circuit (34) further comprises a deviation conduit (42) connected in parallel with said first exchanger (22), and a second exchanger (36) for exchanging heat with the interior of the vehicle, said second exchanger being located in said circuit (34) between the dissipation resistor (20) and the deviation conduit (42).

## Patentansprüche

1. Elektrisch betriebenes Kraftfahrzeug (1), mit wenigstens einem Antriebsrad (4), mechanischen Bremsmitteln (14) für das Rad (4), wenigstens einem Elektromotor (2), der mechanisch mit dem Antriebsrad (4) gekoppelt ist, einem wiederaufladbaren Akkumulator (6) für elektrische Energie und Mitteln (8) zur Lenkung und Übertragung von Energie, die mit dem Akkumulator (6) und mit dem Elektromotor (2) gekoppelt sind, wobei das Fahrzeug außerdem elektrische Bremsmittel, mit denen der Elektromotor (2) im Generatorbetrieb betrieben werden kann, sowie Mittel (16) zum Umsetzen von während des elektrischen Bremsvorgangs erzeugter elektrischer Energie mittels eines Widerstandes in Wärme enthält und dadurch gekennzeichnet ist, daß es außerdem einen Verbrennungsmotor (30), der mit einem Kühlkreis (34) mit Fluidzirkulation versehen ist, und einen Generator (32) für elektrische Energie enthält, der wenigstens indirekt mit dem Verbrennungsmotor (30) verbunden ist, um den Akkumulator (6) wieder aufzuladen, und daß die Mittel (16) zur Umsetzung von Energie in Wärme den Kühlkreis (34) und einen Wärmeumsetzungswiderstand (20) enthalten, der in thermischem Kontakt mit einer Fluidleitung (26) des Kühlkreises (34) angeordnet ist, um die Wärme an das Fluid zu übertragen.

2. Fahrzeug nach Anspruch 1, dadurch gekennzeichnet, daß der Kühlkreis (34) einen ersten Wärmetauscher (22) in Kontakt mit der äußeren Umgebung des Fahrzeugs (1), eine erste Pumpe (24) sowie Leitungen (26), die in einem geschlossenen Kreis den ersten Tauscher, die erste Pumpe und den Verbrennungsmotor verbinden, enthält, wobei der Wärmeumsetzungswiderstand in engem thermischen Kontakt mit einem Teil (28) der Leitungen (26) angeordnet ist.

3. Fahrzeug nach Anspruch 2, dadurch gekennzeichnet, daß der Widerstand um den Teil (28) gewickelt ist.

4. Fahrzeug nach den Ansprüchen 2 oder 3, dadurch gekennzeichnet, daß die Mittel (8) zur Lenkung und Übertragung von Energie Mittel zum Erzeugen eines Meßsignals, das den Ladegrad des Akkumulators (6) repräsentiert, sowie Steuermittel enthalten, die als Antwort auf das Meßsignal, das angibt, daß der Akkumulator vollständig geladen ist, wenigstens einen Teil des Ladestroms an die Wärmeumsetzungsmittel (20) ableiten und die erste Pumpe (24) anhalten.

5. Fahrzeug nach einem der vorangehenden Ansprüche, dadurch gekennzeichnet, daß die Leitungen (26) des Kühlkreises (34) zwischen einem Kühlungseingang (38) und einem Kühlungsausgang (40) des Verbrennungsmotors (30) verlaufen und daß der erste Tauscher (22) in dem Kreis (34) zwischen dem Wärmeumsetzungswiderstand (20) und dem Kühlungseingang (38) angeordnet ist.

6. Fahrzeug nach Anspruch 5, dadurch gekennzeichnet, daß es außerdem eine zweite Pumpe (46) enthält, die mechanisch mit dem Verbrennungsmotor (30) verbunden ist.

7. Fahrzeug nach einem der Ansprüche 5 oder 6, dadurch gekennzeichnet, daß der Kühlkreis (34) außerdem eine Abzweigungsleitung (42), die parallel zum ersten Wärmetauscher (22) abgezweigt ist, sowie einen zweiten Wärmetauscher (36) in Kontakt mit dem Innenraum des Fahrzeugs enthält, der im Kreis (34) zwischen dem Wärmeumsetzungswiderstand (20) und der Abzweigungsleitung (42) angeordnet ist.
